# EUROPEAN PATENT APPLICATION

(11) **EP 4 092 147 A1**
(43) Date of publication of application: **23.11.2022**
(21) Application number: 21382463.4
(22) Date of filing: 21.05.2021
(51) Int. Cl.: C22B 3/38, C22B 3/40, C22B 30/00

(54) **SEPARATION OF ARSENIC FROM ANTIMONY AND BISMUTH IN AN ELUATE**

(71) Applicant: Universitat Politècnica De Catalunya, 08034 Barcelona (ES); Consejo Superior de Investigaciones Cientificas, 28006 Madrid (ES)
(72) Inventor: CORTINA PALLAS, Jose Luis, 08034 BARCELONA (ES); LÓPEZ RODRÍGUEZ, Julio, 08034 BARCELONA (ES); VALDERRAMA ANGEL, Cesar Alberto, 08034 BARCELONA (ES); CÓRDOBA SOLA, Patricia, 08034 BARCELONA (ES); MORENO PALMEROLA, Natalia, 08034 BARCELONA (ES)
(74) Representative: Ungria López, Javier

(57) **Abstract**

The instant invention relates to a method for separating antimony and bismuth from arsenic in an acidic aqueous medium, wherein the method comprises (a) contacting the acidic aqueous medium containing antimony, bismuth and arsenic with an organic phase, wherein the organic phase comprises an alkylphosphine oxide as an extraction agent; and (b) separating the acidic aqueous medium from the organic phase, wherein the arsenic remains in the acidic aqueous medium and wherein the antimony and bismuth are extracted into the organic phase, wherein the acidic aqueous medium is a hydrochloric acid solution, and wherein the hydrochloric acid concentration is between 1M and 6M. The methods of the invention can be used to recover high value by-products (antimony and bismuth) and to safely remove toxic by-products (arsenic) from the hydrochloric acid solution that is generated during the regeneration of the ionexchange resins typically used in the electrolytic refining of copper.

## Description

### FIELD OF THE INVENTION

The present invention generally relates to the field of pyrometallurgy and hydrometallurgy industries. In particular, the present invention relates to methods for the recovery and valorisation of added-value impurity content from electrolytic solutions produced during copper refinery processes. More specifically, the invention focuses on the recovery of antimony and bismuth and the removal of arsenic from the effluents generated on the regeneration of the ion exchange resins, which are typically used to remove these impurities from the electrolytic solutions produced during the copper refinery processes.

### BACKGROUND

The importance of copper has led to a continuing search for more efficient production methods that are capable of yielding high purity copper. Methods of generating high purity copper include pyrometallurgical processing methods such as smelting methods. However, pyrometallurgical processing and purification of copper ores inevitably leads to a variety of impurities within the crude product due to inherent limitations of the processing methods. Therefore, the crude product must be subjected to further purification steps in order to remove the admixed impurities. That is, additional processes are necessary to bring the crude product to the desired purity standards.

Over seventy per cent of the copper metal produced comes from the smelting of copper sulphide concentrates. After copper is isolated from copper sulphide concentrates, it is deposited into copper anodes. These anodes contain a variety of metal impurities that are soluble in the molten copper. At this point, the copper is approximately 99% pure. However, for some industries, such as wire and electrical operations, the purity of the copper must be at least 99.99%. Moreover, aside from the overall purity of copper, some impurities in particular must be kept to a minimum. For example, bismuth present even in only at ppb level can make copper too brittle to pull wire. As with other metals, smelting alone is insufficient to generate high purity copper. Precious metals, nickel, lead, iron, selenium, tellurium, arsenic, antimony, tin, and bismuth are potentially found in this crude copper ("blister"), depending on the ore of origin, and thus further refining is required. The removal of impurities is critical in copper metallurgy for the production of high-quality copper, but it is also of great importance from an environmental point of view. Due to the constant increase in impurities in copper ore over the years, an even more critical situation can be reasonably expected in the future. It is foreseeable that in the near future, copper plants along the world will experience a significant increase in the content of impurities (mainly Sb and Bi) in the ores and concentrates processed. Thus, it is essential to keep impurities below the levels accepted by national and international standards for the copper industry and to decrease the total emission of harmful components.

Impurity removal in the copper smelting process is carried out through oxidation, followed by slagging and volatilisation during smelting, conversion and refining. A combination of intensive reactors, using oxygen or oxygen-enriched air as the blowing gas, has provided a number of improvements in copper smelter processes. However, the method of removing impurities has not changed in many years. Instead, it has become a serious limitation in the modern process of copper smelting and converting.

One of the most widely used alternative methods to increase copper purity is to remove impurities from the "blister" by electrolytic refining. In electrolytic refining, the blister is re-melted and poured into sheets. These sheets function as a copper anode in an electrolytic cell, which dissolves and eventually re-plates as a final copper cathodic product. The majority of impurities in the copper anode form an insoluble "slime" on the surface of the electrode or fall to the bottom of the cell. However, some impurities, in particular, antimony, bismuth and arsenic, dissolve into the acidic copper electrolyte and can be incorporated into the cathode by different mechanisms. If the electrolyte solution incorporating these impurities is not eliminated from the electrolytic refining circuit, these impurities will deteriorate the cathode quality resulting in concerns for negative downstream processing. Due to the significant economic impact of these electrolyte impurities, copper producers go to great lengths to mitigate any and all factors that negatively impact operating costs and/or the quality of the final product.

In order to assure the cathode quality, the electrolyte solution must be bled and treated. Among the variety of methods available for removal of antimony and bismuth, one option is the use of ion exchange columns.

In these methods, metal, metalloid and non-metal impurities are selectively removed from the copper containing sulphuric electrolyte using ion-exchange resins. However, in a subsequent step the ion exchange resins have to be regenerated with a concentrated hydrochloric acid (HCI) solution. The hydrochloric acid solution thus generated is characterized by the presence of:
i) added-value elements such as antimony (Sb(III)) and bismuth (Bi(IIII));
ii) toxic species of arsenic, mainly and As(V), although traces of As(III) could be found;
iii) sulphuric acid; and
iv) metallic traces such as iron, copper, nickel, calcium, and magnesium.

Antimony, bismuth and arsenic in particular are of major interest. While antimony and bismuth are targets for their recovery and separation because of their intrinsic economic value due to their scarcity, arsenic is considered a toxic impurity affecting the quality of by-products and its safe separation from antimony and bismuth is desired, ideally as an environmentally stable species. In methods known in the art, the HCI eluate is typically limed and the sludge generated disposed as toxic waste. In the alternative, the HCI eluate is neutralised with Ca(OH)₂ to collect Sb and Bi as the respective metal hydroxides. The neutralised sludge can be sold as a raw material for the production of electrical-quality bismuth.

However, there is still a need in the art to provide methods directed at the efficient treatment of the hydrochloric acid solution that is generated during the regeneration of the ion-exchange resins typically used in the electrolytic refining of copper, such that high value by-products can be recovered and toxic by-products can be safely removed.

### SUMMARY OF THE INVENTION

In the context of the above background, the instant technology aims to recover high value by-products and to safely remove toxic by-products from the hydrochloric acid solution that is generated during the regeneration of the ion-exchange resins typically used in the electrolytic refining of copper (Sole et al, Present and future applications of ion exchange in hydrometallurgy: An overview, Conference Paper, IEx 2016 - Hydrometallurgy Session; Ruiz I. et al., Pilot tests on Bismuth and Antimony removal from electrolyte at Atlantic Copper refinery, Proceedings of EMC 2013). More specifically, the inventors have identified that a liquid-liquid separation method based on a step of contacting the hydrochloric acid solution that is generated during the regeneration of the ion-exchange resins typically used in the electrolytic refining of copper with an organic phase, wherein the organic phase comprises an alkylphosphine oxide as an extraction agent, is particularly efficient at extracting antimony and bismuth into the organic phase, whereas the arsenic contaminant remains in the acidic aqueous medium. This allows for efficient separation between valuable and toxic species.

Accordingly, in a first aspect, the invention relates to a method for separating antimony and bismuth from arsenic in an acidic aqueous medium, wherein the method comprises:
a) contacting the acidic aqueous medium containing antimony, bismuth and arsenic with an organic phase, wherein the organic phase comprises an alkylphosphine oxide as an extraction agent;
b) separating the acidic aqueous medium from the organic phase, wherein the arsenic remains in the acidic aqueous medium and wherein the antimony and bismuth are extracted into the organic phase,
   wherein the acidic aqueous medium is a hydrochloric acid solution, and wherein the hydrochloric acid concentration is between 1M and 6M.

In a related aspect, the invention relates to a method for recovering antimony and bismuth and for removing arsenic from the hydrochloric acid solution that is generated during the regeneration of an ion-exchange resin used in the electrolytic refining of copper, wherein the method comprises:
- contacting the hydrochloric acid solution containing antimony, bismuth and arsenic with an organic phase, wherein the hydrochloric acid concentration is between 1M and 6M, and wherein the organic phase comprises an alkylphosphine oxide as an extraction agent;
- separating the hydrochloric acid solution from the organic phase, wherein the arsenic remains in the separated acidic aqueous phase and wherein the antimony and bismuth are extracted into the separated organic phase;
- contacting the separated organic phase with a scrub aqueous phase;
- separating the scrubbed organic phase from the scrub aqueous phase, wherein the separated scrub aqueous phase is pooled together with the separated hydrochloric solution, and contacting the pooled solution with a ferric and/or a ferrous salt to precipitate scorodite;
- contacting the scrubbed organic phase with a nitric acid strip solution;
- separating the bismuth stripped organic phase from the nitric acid strip solution, wherein the bismuth is extracted into the nitric acid strip solution, and contacting the nitric acid strip solution with an alkali solution to precipitate a first salt of bismuth, or with and alkali solution containing chloride ions to precipitate a second salt of bismuth.
- contacting the bismuth stripped organic phase with a sulphuric acid strip solution;
- separating the antimony and bismuth stripped organic phase from the sulphuric acid strip solution, wherein the antimony is extracted into the sulphuric acid strip solution and contacting the sulphuric acid strip solution with alkali solution to precipitate a first salt of antimony, or with an alkali solution containing chloride ions to precipitate a second salt of antimony.

In a further aspect, the invention relates to the use of a composition comprising an organic solvent; and an extraction agent, wherein the extraction agent is an alkylphosphine oxide, for separating antimony and bismuth from arsenic in an acidic aqueous medium, wherein the acidic aqueous medium is a hydrochloric acid solution, and wherein the hydrochloric acid concentration is between 1M and 6M.

### BRIEF DESCRIPTION OF THE DRAWINGS

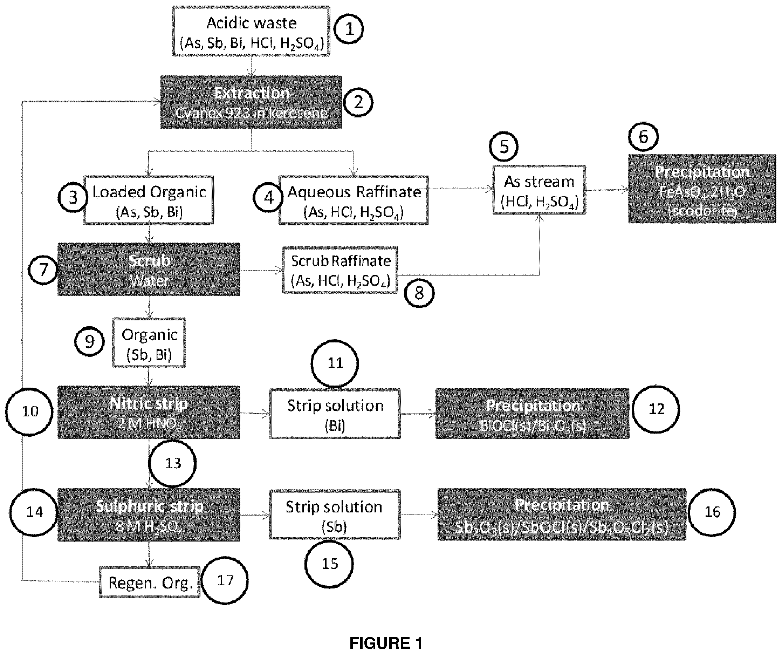

Figure 1 shows a schematic representation of one of the methods of the invention. In this diagram,
- Item 1 represents the hydrochloric acid solution that is generated during the regeneration of the ion-exchange resins typically used in the electrolytic refining of copper;
- Item 2 represents a step of liquid-liquid extraction with an organic phase, such that the arsenic remains in the acidic aqueous medium, whereas the antimony and bismuth are extracted into the organic phase;
- Item 3 represents the separated organic phase carrying antimony, bismuth, and a small amount of arsenic as contaminant;
- Item 4 represents the separated acidic aqueous medium carrying arsenic;
- Item 5 represents the arsenic stream, wherein the acidic aqueous medium and a scrub aqueous medium are pooled together;
- Item 6 represents a step of precipitating the arsenic in the arsenic stream with ferric and/or ferrous salts to form environmentally safe scorodite;
- Item 7 represents a step of scrubbing (i.e., washing) by liquid-liquid extraction with a scrub aqueous phase, wherein the organic phase is washed of its arsenic contaminant;
- Item 8 represents the separated scrub aqueous phase carrying the arsenic contaminant;
- Item 9 represents the scrubbed organic phase carrying antimony and bismuth;
- Item 10 represents a step of liquid-liquid extraction with nitric acid, such that the antimony remains in the organic phase, whereas the bismuth is extracted into the nitric acid strip solution;
- Item 11 represents the separated nitric acid strip solution carrying bismuth;
- Item 12 represents a step of precipitating the bismuth in the nitric acid strip solution with an alkali solution to precipitate a first salt of bismuth (e.g., Bi₂O₃(s)), or with an alkali solution containing chloride ions to precipitate a second salt of bismuth (e.g., BiOCI(s));
- Item 13 represents the stripped organic phase carrying antimony;
- Item 14 represents a step of liquid-liquid extraction with sulphuric acid, such that the antimony is extracted into the sulphuric acid strip solution;
- Item 15 represents the separated sulphuric acid strip solution carrying antimony;
- Item 16 represents a step of precipitating the antimony in the sulphuric acid strip solution with an alkali solution to precipitate a firsts salt of antimony (e.g., Sb₂O₃(s)), or with an alkali solution containing chloride ions to precipitate a second salt of antimony (e.g., SbOCI(s) and/or Sb₄O₅Cl₂(s));
- Item 17 represents the organic phase which has been depleted of the by-products and which can be recycled as fresh organic phase for the step of liquid-liquid extraction with the hydrochloric acid solution that is generated during the regeneration of the ion-exchange resins typically used in the electrolytic refining of copper.

### DETAILED DESCRIPTION

As explained above, the instant technology aims to recover high value by-products and to safely remove toxic by-products from the hydrochloric acid solution that is generated during the regeneration of the ion-exchange resins typically used in the electrolytic refining of copper. This particular invention relates to the recovery of antimony and bismuth and to the safe removal of arsenic from said hydrochloric acid solution that is generated during the regeneration of the ion-exchange resins typically used in the electrolytic refining of copper.

### Methods of the invention

In a first aspect, the invention relates to a method for separating antimony and bismuth from arsenic in an acidic aqueous medium, wherein the method comprises:
a) contacting the acidic aqueous medium containing antimony, bismuth and arsenic with an organic phase, wherein the organic phase comprises an alkylphosphine oxide as an extraction agent;
b) separating the acidic aqueous medium from the organic phase, wherein the arsenic remains in the acidic aqueous medium and wherein the antimony and bismuth are extracted into the organic phase,
   wherein the acidic aqueous medium is a hydrochloric acid solution, and wherein the hydrochloric acid concentration is between 1M and 6M.

In particular embodiments of the invention, the method allows for the extraction into the organic phase of at least 90%, at least 95%, at least 96%, at least 97%, at least 98%, at least 99%, at least 99.1%, at least 99.2%, at least 99.3%, at least 99.4%, or at least 99.5% of the initial concentration of antimony in the acidic aqueous medium (i.e., the hydrochloric acid solution). In particular embodiments of the invention, the method allows for the extraction into the organic phase of at least 90%, at least 95%, at least 96%, at least 97%, at least 98%, at least 99%, at least 99.1%, at least 99.2%, at least 99.3%, at least 99.4%, or at least 99.5% of the initial concentration of bismuth in the acidic aqueous medium (i.e., the hydrochloric acid solution). In particular embodiments of the invention, the method allows for the extraction into the organic phase of less than 50%, less than 40%, less than 35%, less than 30%, less than 25%, less than 24%, less than 23%, less than 22%, less than 21%, or less than 20% of the initial concentration of arsenic in the acidic aqueous medium (i.e., the hydrochloric acid solution).

The acidic aqueous medium is a hydrochloric acid solution with a hydrochloric acid concentration of between 1M and 6M. In particular embodiments, the hydrochloric acid concentration is between 1M and 6M, between 2M and 6M, between 3M and 6M, between 4M and 6M, or between 5M and 6M. In a particular embodiment, the acidic aqueous medium is a hydrochloric acid solution with a hydrochloric acid concentration of between 1M and 6M, further comprising sulphuric acid with a sulphuric acid concentration of between 0.1M and 0.5M.

In a particular embodiment, the hydrochloric acid solution is a hydrochloric acid solution that is generated during the regeneration of the ion-exchange resins used in the electrolytic refining of copper. Said hydrochloric acid solution thus generated carries valuable and/or toxic metal, metalloid and non-metal impurities. In a particular embodiment, the hydrochloric acid solution produced during the regeneration of the ion-exchange resins used in the polishing stage is a bleed stream of a hydrochloric solution with valuable impurities, which is bled from other refinery process containing also valuable impurities. As used herein, the term "valuable impurities" refers to metals (e.g. Bi) and/or metalloids (e.g. Sb) that can be present in the hydrochloric acid solution produced in the regeneration of the ion-exchange resins during the polishing stage of the electrolyte refinery ion-exchange column, and which may have strategic and/or added value. As used herein, the term "toxic impurities" refers to toxic and undesired metals, metalloids and/or non-metals that can be present in the hydrochloric acid solution produced in the regeneration of the ion-exchange resins during the polishing stage of the electrolyte refinery ion-exchange column, and which may involve toxicity concerns (i.e., an environmental concern) that reduce the quality of any recovered valuable elements and which needs to be separated and disposed of as an environmentally inert species following robust stabilisation processes.

In the instant invention, the major impurities are antimony, bismuth and arsenic, although other impurities at lower contents could be found in the hydrochloric acid solution that is generated during the regeneration of the ion-exchange resins used in the electrolytic refining of copper (e.g. calcium, copper, sodium, aluminium, nickel, indium, magnesium, vanadium, iron, zinc, silver, chromium, molybdenum, manganese, cobalt, lead, lithium). In particular, the hydrochloric acid solution that is generated during the regeneration of the ion-exchange resins used in the electrolytic refining of copper may contain impurities at lower concentrations than antimony, bismuth and arsenic. The minor contaminants and their concentrations may be Ca (300 mg/L), Cu (250 mg/L), Na (90 mg/L), Al (110 mg/L), Ni (18 mg/L) and In (38 mg/L). Other metals (Mg, V, Fe, Zn and Ag, Cr, In, Mo, In, Ba, Mn, Co, Pb) may be present at concentrations under 5 mg/L. The rest of the metals in the periodic table may be present at concentrations in the order of µg/L. Thus, the method of the invention also allows for the separation of antimony and bismuth from other contaminants such as calcium and copper. In particular embodiments, the methods of the invention allow for the retrieval of antimony salts that are 70%, 75%, 80%, 85%, 90%, or 95% pure. In particular embodiments, the methods of the invention allow for the retrieval of bismuth salts that are 70%, 75%, 80%, 85%, 90%, or 95% pure.

In the context of the invention, the step of contacting the acidic aqueous medium containing antimony, bismuth and arsenic with an organic phase, wherein the organic phase comprises an alkylphosphine oxide as an extraction agent, can be performed by mixing. Mixing of the hydrochloric solution with the organic solution can be achieved via any known method in the state of the art. In one or more embodiments, mixing the hydrochloric solution comprising valuable and/or toxic impurities with the organic solution comprises mixing in tank to provide an emulsion of the loaded organic solution and a hydrochloric solution with reduced valuable impurities.

After the hydrochloric solution is adequately mixed with the organic solution, the two phases are allowed to separate. For example, the loaded organic solution may be separated from the hydrochloric acid solution with reduced valuable impurities by methods known in the art. For example, separating the loaded organic solution and the hydrochloric solution with reduced valuable impurities can be carried out in a settler. The method of the invention may further comprise a step of treating the hydrochloric solution, which has been depleted of the valuable impurities antimony and bismuth but which maintains the toxic arsenic impurity in the acidic aqueous medium, with a ferric and/or a ferrous salt to precipitate an environmentally safe, geochemically stable mineral (i.e., scorodite). Thus, in a particular embodiment the hydrochloric solution is treated by contacting with a ferric and/or a ferrous salt in a precipitation reactor, where it is stabilised as a geochemically stable mineral (i.e., scorodite). In a particular embodiment, the ferric and/or ferrous salts are selected from the group consisting of ferric chloride, ferrous sulphate and combinations thereof. In general, Fe (III) is typically needed in the precipitation of scorodite, wherein the most common solution is the use of a ferric salt (e.g., ferric chloride). However, there is the possibility of using an iron salt Fe (II) (e.g., ferrous sulphate) under conditions suitable to oxidize the Fe (II) to Fe (III) (e.g., under oxygen) and produce it *in-situ.* The use of ferrous sulphate is usually cheaper than ferric chloride.

The organic solution which is loaded with the valuable impurities can be mixed in a mixing tank with water as a scrub solution to provide an emulsion comprising the scrub solution and the scrubbed organic phase. Although it is supposed that at this step the scrub solution contains the acidic impurities H₃AsO₄, HCI and H₂SO₄; the present invention is not limited by such a theoretical explanation. This scrub solution can be specifically treated with a ferric and/or ferrous salt to precipitate an environmentally safe, geochemically stable mineral (i.e., scorodite), or it can be mixed with the hydrochloric acid stream with reduced valuable impurities generated in the settler, such that a pooled solution can be treated with a ferric and/or a ferrous salt to precipitate an environmentally safe, geochemically stable mineral (i.e., scorodite).

In order to recover the valuable impurities antimony and bismuth from the loaded organic solution, the following steps are necessary:
The organic solution loaded with antimony and bismuth is mixed with a nitric acid strip solution, wherein the bismuth is extracted into the nitric acid strip solution. In particular embodiments of the invention, this step allows for the extraction into the nitric acid strip solution of at least 50%, at least 60%, at least 70%, at least 80%, at least 90%, at least 95%, at least 96%, at least 97%, at least 98%, at least 99%, at least 99.1%, at least 99.2%, at least 99.3%, at least 99.4%, or at least 99.5% of the initial concentration of bismuth in the organic solution loaded with antimony and bismuth. This step provides an emulsion comprising a strip nitric acid aqueous solution containing bismuth and a stripped organic solution containing antimony. The strip nitric acid aqueous solution containing bismuth and the stripped organic solution containing antimony are subsequently allowed to separate. The strip nitric acid aqueous solution containing bismuth is then mixed with an alkali solution to precipitate a first salt of bismuth (e.g., Bi₂O₃(s)), or with an alkali solution containing chloride ions to precipitate a second salt of bismuth (e.g., BiOCI(s)). The precipitate may be separated by filtration. In a particular embodiment, the term "first salt of bismuth" and the term "second salt of bismuth" may refer to a single species, that is, a single salt, or they may refer to a plurality of species, that is, more than one single salt. In a particular embodiment, the first salt of bismuth is Bi₂O₃(s). In a particular embodiment, the second salt of bismuth is BiOCI(s).

The organic solution loaded with antimony is mixed with a sulphuric acid strip solution, wherein the antimony is extracted into the sulphuric acid strip solution. In particular embodiments of the invention, this step allows for the extraction into the sulphuric acid strip solution of at least 50%, at least 60%, at least 70%, at least 80%, at least 90%, at least 95%, at least 96%, at least 97%, at least 98%, at least 99%, at least 99.1%, at least 99.2%, at least 99.3%, at least 99.4%, or at least 99.5% of the initial concentration of antimony in the organic solution loaded with antimony. This step provides an emulsion comprising a strip sulphuric acid aqueous solution containing antimony and a stripped organic solution depleted of valuable impurities. The strip sulphuric acid aqueous solution containing antimony and the stripped organic solution depleted of valuable impurities are subsequently allowed to separate. The strip sulphuric acid aqueous solution containing antimony is then mixed with an alkali solution to precipitate a first salt of antibody (e.g., Sb₂O₃(s)), or with an alkali solution containing chloride ions to precipitate a second salt of antimony (e.g., SbOCI(s) or Sb₄O₅Cl₂(s)). The precipitate may be separated by filtration. In a particular embodiment, the term "first salt of antimony" and the term "second salt of antimony" may refer to a single species, that is, a single salt, or they may refer to a plurality of species, that is, more than one single salt. In a particular embodiment, the first salt of antimony is Sb₂O₃(s). In a particular embodiment, the second salt of antimony is SbOCI(s) and/or Sb₄O₅Cl₂(s).

In the context of the invention, the term "alkali solution" refers to a solution in water of a basic salt of an alkali metal or alkaline earth metal. In particular embodiments, the alkali solution may be selected from the group consisting of sodium hydroxide (NaOH), potassium hydroxide (KOH), calcium hydroxide (Ca(OH)₂), and combinations thereof.

Thus, in an aspect, the invention relates to a method for recovering antimony and bismuth and for removing arsenic from the hydrochloric acid solution that is generated during the regeneration of an ion-exchange resin used in the electrolytic refining of copper, wherein the method comprises:
- contacting the hydrochloric acid solution containing antimony, bismuth and arsenic with an organic phase, wherein the hydrochloric acid concentration is between 1M and 6M, and wherein the organic phase comprises an alkylphosphine oxide as an extraction agent;
- separating the hydrochloric acid solution from the organic phase, wherein the arsenic remains in the separated acidic aqueous phase and wherein the antimony and bismuth are extracted into the separated organic phase;
- contacting the separated organic phase with a scrub aqueous phase;
- separating the scrubbed organic phase from the scrub aqueous phase, wherein the separated scrub aqueous phase is pooled together with the separated hydrochloric solution, and contacting the pooled solution with a ferric and/or a ferrous salt to precipitate scorodite;
- contacting the scrubbed organic phase with a nitric acid strip solution;
- separating the bismuth stripped organic phase from the nitric acid strip solution, wherein the bismuth is extracted into the nitric acid strip solution, and contacting the nitric acid strip solution with an alkali solution to precipitate a first salt of bismuth (e.g., Bi₂O₃ (s)), or with an alkali solution containing chloride ions to precipitate a second salt of bismuth (e.g., BiOCI(s));
- contacting the bismuth stripped organic phase with a sulphuric acid strip solution;
- separating the antimony and bismuth stripped organic phase from the sulphuric acid strip solution, wherein the antimony is extracted into the sulphuric acid strip solution and contacting the sulphuric acid strip solution with an alkali solution to precipitate a first salt of antimony (e.g., Sb₂O₃(s)), or with an alkali solution containing chloride ions to precipitate a second salt of antimony (e.g., SbOCI(s) or Sb₄O₅Cl₂(S)).

An example of a circuit according to one or more embodiments of the invention is shown in figure 1. Refinery electrolyte is generated in refinery by bringing in cast copper anodes (not shown) containing valuable and/or toxic impurities (i.e., metals, metalloids and/or non-metals) that must be removed to produce high-grade copper. The copper anode is electroplated onto the cathode through a sulphuric acid electrolyte solution. As the anode is dissolved into the electrolyte, the valuable impurities in the anode are liberated, soluble species remain in the electrolyte and insoluble species form a sludge at the bottom of the electro-refining cell. A bleed stream of the electrolyte solution with valuable impurities is taken from the electro-refining cell. The electrolyte with valuable impurities is the bleed stream of the refinery electrolyte to be treated for recovery of valuable and/or toxic impurities.

The bleed stream 1 of the hydrochloric acid solution produced on the regeneration of the ion-exchange resins used in the polishing stage with valuable and toxic impurities is pumped into an extraction mixing tank 2 where it is mixed with an organic solution. The extraction mixing tank 2 can be a standard liquid-liquid extraction mixing tank. In several embodiments, the mixing system could be a single mixing tank with a mixer or multiple mixing tanks and mixers in series. During extraction mixing in tank 2, the valuable impurities in the electrolyte are transferred from the aqueous acidic phase into the organic phase, which results in an emulsion of an acidic aqueous solution with reduced valuable impurities and an organic phase loaded with the valuable impurities (i.e. a loaded organic phase). This emulsion then overflows from the extraction mixing tank into the extraction settler 3. In the extraction settler 3, the phases are allowed to separate as they flow from the end of the tank near the mixing tank to the opposite end. The solutions enter one end of the tank from the extraction mixing tank and the phases separate as they flow from one end to the other, where underflow and overflow weirs allow the separate phases to be pumped to different locations.

After the phases have separated, the hydrochloric acidic phase with reduced valuable impurity but loaded with a major fraction of the toxic impurities 4 is pumped back to a collection tank 5, where it is mixed with other streams generated and containing toxic elements for safe disposal as a geological stable mineral form in a precipitation reactor 6 with a filtering system. This reactor is a typical physicochemical unit used on the hydrometallurgical plants. On the other hand, the organic phase loaded with valuable impurities and some amount of toxic elements is pumped to the scrubber unit 7 where it is mixed with water as a scrubbing aqueous solution. This scrubbing aqueous solution is then separated 8 and mixed with other streams containing the toxic oxyacid forms and other mineral acids in the collection tank 5.

The loaded organic phase separated from the scrubbing stage is pumped to the strip mixing tank 9 where it is mixed with fresh strip solution of nitric acid. Strip mixing tank 9 may be a standard solvent extraction mixing tank similar to those used in solvent extraction hydrometallurgical plants. In one or more embodiments, strip mixing tank 9 comprises a single mixing tank with a mixer or multiple mixing tanks and mixers in series.

During this mixing, the bismuth in the loaded organic phase is transferred from the loaded organic phase to the fresh nitric acid strip solution, which results in an emulsion of an aqueous nitric acid strip solution containing bismuth and a stripped organic phase containing antimony. This emulsion overflows the strip mixing tank into the strip settler 10. In the settler, the phases are allowed to separate as they flow from the end of the tank near the mixing tank to the opposite end. The separation is achieved through via underflow and overflow weirs, which allow the separate phases to be pumped to different locations. In this respect, they may be similar to those tanks used in solvent extraction units in hydrometallurgical plants. After the phases have separated, the strip nitric acid solution containing bismuth is pumped back to the strip mixing tank 9 to be reused to strip more organic phase or it is pumped off towards the bismuth recovery reactor 12. In the bismuth recovery reactor and by using a mixture of an alkaline solution and a chloride salt, bismuth ions in solution are converted to bismuth hydroxyl chloride and recovered with a filtering system. This reactor is a typical physicochemical unit used on the hydrometallurgical plants incorporating a filtration system.

The organic phase loaded with antimony and free of bismuth, separated from the stripping stage 13 is pumped to the strip mixing tank 14 where it is mixed with fresh strip solution of sulphuric acid. Strip mixing tank 13 may be a standard solvent extraction mixing tank similar to 10. During this mixing, the loaded antimony in the organic phase is transferred from the loaded organic phase to the fresh sulphuric acid strip solution, which results in an emulsion of an aqueous sulphuric acid strip solution containing antimony and a stripped organic depleted of valuable impurities. This emulsion overflows the strip mixing tank into the strip settler 14. In the settler, the phases are allowed to separate as they flow from the end of the tank near the mixing tank to the opposite end. The separation is achieved through via underflow and overflow weirs, which allow the separate phases to be pumped to different locations. In this respect, they may be similar to tank 11. After the phases have separated, the sulphuric acid strip solution containing antimony is pumped back to the strip mixing tank 14 to be reused to strip more organic phase or it is pumped off towards the antimony recovery reactor 16. In the antimony recovery reactor and by using a mixture of an alkaline solution and a chloride salt, antimony ions in solution are converted to antimony hydroxyl chloride and separated with a filtering system. This reactor is a typical physicochemical unit 12. The stripped organic phase depleted of valuable impurities is then pumped back to the extraction mixing tank 2 to be reused again.

The stripped organic phase and the organic phase loaded with valuable and/or toxic impurities may comprise an organic extractant(s), modifier(s) and diluents(s). The difference between the stripped organic phase and the organic phase loaded with valuable and/or toxic impurities is in the amount of valuable and/or toxic impurities that are loaded into the organic phase. In particular embodiments of the methods of the invention, the stripped organic phase depleted of valuable impurities (i.e., depleted of bismuth and antimony) can be recycled and used again as fresh organic phase to extract the valuable impurities (i.e., bismuth and antimony) from the acidic aqueous medium. The organic phase composition can vary depending on application.

The methods of the invention involve a step of contacting the acidic aqueous medium containing antimony, bismuth and arsenic with an organic phase, wherein the organic phase comprises an alkylphosphine oxide as an extraction agent. The alkyl phosphine oxide may be dissolved in a solvent and/or diluents. Solvents and/or diluents commonly used in liquid-liquid extraction may be used. In some embodiments, the solvent and/or diluents comprise a water-immiscible organic solvent that incorporates solubilised liquid-liquid extractants and modifiers. In further embodiments, the water-immiscible organic solvent is selected from the group of hydrocarbon solvents consisting of kerosene, toluene, xylene and combinations thereof. That is, in a particular embodiment, the organic phase comprises a solvent selected from the group consisting of kerosene, toluene, xylene and combinations thereof. In a particular embodiment, the solvent is kerosene. Diluents with higher aromatic contents are due to the higher solubility of the extractants non-metal metal solvating complexes. In particular embodiments, the concentration of alkylphosphine oxide in the organic phase is of at least 0.02 M, at least 0.03 M, at least 0.04 M, at least 0.05 M, at least 0.06 M, at least 0.07 M, at least 0.08 M, at least 0.09 M, at least 0.10 M, at least 0.11 M, at least 0.12 M, at least 0.13 M, at least 0.14 M, at least 0.15 M, at least 0.16 M, at least 0.17 M, at least 0.18 M, at least 0.19 M, at least 0.20 M, at least 0.21 M, at least 0.22 M, at least 0.23 M, at least 0.24 M, at least 0.25 M, at least 0.26 M, at least 0.27 M, at least 0.28 M, at least 0.29 M, at least 0.30 M, at least 0.35 M, at least 0.40 M, at least 0.45 M, or at least 0.50 M. In particular embodiments, the concentration of alkylphosphine oxide in the organic phase is from about 0.02 M to about 3.5 M, from about 0.05 M to about 3.0 M, from about 0.08 M to about 2.5 M, from about 0.10 M to about 2.0 M, from about 0.12 M to about 1.0 M, or from about 0.15 M to about 0.5 M.

The hydrochloric acid solution produced during the regeneration of the ion-exchange resins of the polishing stage, containing dissolved valuable and/or toxic impurities, may be contacted with the water-immiscible organic solution comprised of a hydrocarbon solvent as described herein and one or a mixture of extraction agents described herein for a period of time sufficient to allow the extraction agents to form a complex with the metal, metalloid or non-metal impurity ions with added value (i.e., antimony and bismuth). The hydrochloric aqueous solution can be contacted by the organic solution in any manner that brings the two immiscible phases together for a period of time sufficient to allow the extraction agents to form said complexes. This includes shaking the two phases together in separation funnels or mixing the two phases together in a mixing tank.

The extraction agent is an alkylphosphine oxide. In a particular embodiment, the alkylphosphine oxide is selected from the group consisting of R1₃PO, R1₂R2PO, R1R2₂PO, R2₃PO, and combinations thereof, wherein R1 is the linear alkyl group - (CH₂)₇-CH₃ and wherein R2 is the linear alkyl group -(CH₂)₅-CH₃. In a particular embodiment, the alkylphosphine oxide is R1₃PO. In a particular embodiment, the alkylphosphine oxide is R1₂R2PO. In a particular embodiment, the alkylphosphine oxide is R1R2₂PO. In a particular embodiment, the alkylphosphine oxide is R2₃PO. In a particular embodiment, the alkylphosphine oxide is the combination of R1₃PO, and R1₂R2PO. In a particular embodiment, the alkylphosphine oxide is the combination of R1₃PO, and R1R2₂PO. In a particular embodiment, the alkylphosphine oxide is the combination of R1₃PO, and R2₃PO. In a particular embodiment, the alkylphosphine oxide is the combination of R1₂R2PO, and R1R2₂PO. In a particular embodiment, the alkylphosphine oxide is the combination of R1₂R2PO, and R2₃PO. In a particular embodiment, the alkylphosphine oxide is the combination of R1R2₂PO, and R2₃PO. In a particular embodiment, the alkylphosphine oxide is the combination of R1₃PO, R1₂R2PO, and R1R2₂PO. In a particular embodiment, the alkylphosphine oxide is the combination of R1₃PO, R1₂R2PO, and R2₃PO. In a particular embodiment, the alkylphosphine oxide is the combination of R1₃PO, R1R2₂PO, and R2₃PO. In a particular embodiment, the alkylphosphine oxide is the combination of R1₂R2PO, R1R2₂PO, and R2₃PO. In a preferred embodiment, the alkylphosphine oxide is a combination of all of R1₃PO, R1₂R2PO, R1R2₂PO, and R2₃PO. In a particular embodiment, the alkylphosphine oxide is a combination of 14% R1₃PO, 42% R1₂R2PO, 31% R1R2₂PO, and 13% R2₃PO, wherein R1 is the linear alkyl group - (CH₂)₇-CH₃ and wherein R2 is the linear alkyl group -(CH₂)₅-CH₃. Due to constraints imposed by the synthesis and purification methods of the alkyl-phosphine-oxides, alkylphosphine oxides may comprise mixtures of mono-, di- and tri-substituted alkylphosphine oxides. Thus, in one or more embodiments, the hydrochloric aqueous solution may be contacted with more than one component. For example, in some embodiments, the extraction agent may comprise mixtures of mono-, di-, and/or tri-substituted phosphine oxides with different alkyl chains.

In one or more embodiments, the alkyl phosphine oxide may be accompanied by an additive, known as a modifier, which can help to keep the extraction ligand soluble and/or to enhance the re-extraction reaction. That is, the method may further comprise contacting the hydrochloric acid aqueous solution (i.e., the hydrochloric acid aqueous solution produced on the regeneration of the refinery electrolyte polishing stage of the refinery electrolyte solution using ion-exchange resins) with a modifier in the organic phase. Thus, in further embodiments, the modifier and alkylphosphine oxide are present together in a mixture. Such modifiers may be useful as solubility, kinetic and/or thermodynamic modifiers. Traditionally, solubility modifiers add polarity to the organic phase so that the solubility of the complex (or complexes) in the organic phase increases. Thus, the solubility, kinetic and/or thermodynamic modifiers are brought in contact with the hydrochloric acid aqueous solution in the presence of the alkylphosphine oxide. A thermodynamic modifier will have an effect in the extraction and stripping properties of the extractant. In some embodiments, the modifier may have properties as both a thermodynamic and solubility modifier. In some embodiments, modifiers are present in the organic phase at a concentration ranging from about 0 to about 3 M, from about 0.05 M to about 2.5 M, from about 0.10 M to about 2 M, or more particularly about 0.20 M to about 1.5 M. In particular embodiments, the additive is present at a concentration of at least 1%, at least 2%, at least 3%, at least 4%, at least 5%, at least 6%, at least 7%, at least 8%, at least 9%, at least 10%, at least 11%, at least 12%, at least 13%, at least 14%, or at least 15% in the organic phase. In some embodiments, the additive comprises a long-chain alcohol. In one or more embodiments, the additive comprises a C₈-C₁₆ linear, branched or cyclic or aryl alcohol. In particular embodiments, the additive comprises a C₁₀-C₁₃ linear, branched or cyclic or aryl alcohol. In other further embodiments, the additive comprises isotridecanol or isodecanol. In one or more embodiments, the organic phase comprises the additive and additional phosphate esters, including di- or tri-substituted phosphate esters. Examples of suitable tri-substituted phosphate esters include, but are not limited to, tributyl phosphate, trihexyl phosphate ester, trioctyl phosphate ester, and tripentyl phosphate ester. In a particular embodiment, the additive is decanol, preferably 10% (v/v) decanol in the organic phase.

The methods described herein present several advantages over methods known in the prior art. For example, the methods of the invention are compatible with a configuration that provide for a continuous process. Known processes that use resins cannot be carried out continuously, as the resins need to be regenerated after certain periods of use. These methods can be implemented in a plant that is operated in a "worker"/ "polisher" configuration with two columns connected in series. The electrolyte is loaded into the top of the first worker column (called "worker") where it passes through the resin bed, and then from the bottom of this column it is transferred to the top of the second polisher column (called "polisher"). When the resin of the first column is exhausted, the second column becomes the new "worker" column while the first column is being regenerated. When the regeneration step is completed, the first column again becomes the "polisher" column until the second column is exhausted. This cycle repeats continuously. Another benefit is that electrorefineries can obtain high purity bismuth and antimony salts and a geochemically stable arsenic mineral form using much faster methods that use lower amounts of reagents than previously known methods (e.g., precipitation). As a result of the methods and related aspects of the invention, the major non-metallic impurities present in the hydrochloric acid solution that is generated during the regeneration of the ion-exchange resins typically used in the electrolytic refining of copper may be treated. In particular, toxic by-product arsenic may be safely disposed of in the form of scorodite, whereas high-value by-products antimony and bismuth may be effectively recovered as (a) BiOCI and Bi₂O₃; and as (b) SbOCI, Sb₄O₅Cl₂ and Sb₂O₃, respectively. The formation of the chloride- and non chloride-containing by-products will depend on whether chloride ions are present in the alkaline solution that is used during the precipitation step.

All the terms and embodiments described elsewhere herein are equally applicable to these aspects of the invention.

### Uses of the invention

In a further aspect, the invention relates to the use of a composition comprising an organic solvent; and an extraction agent, wherein the extraction agent is an alkylphosphine oxide, for separating antimony and bismuth from arsenic in an acidic aqueous medium, wherein the acidic aqueous medium is a hydrochloric acid solution, and wherein the hydrochloric acid concentration is between 1M and 6M.

In a particular embodiment, the alkylphosphine oxide is selected from the group consisting of R1₃PO, R1₂R2PO, R1R2₂PO, R2₃PO, and combinations thereof, wherein R1 is the linear alkyl group -(CH₂)₇-CH₃ and wherein R2 is the linear alkyl group - (CH₂)₅-CH₃. In a particular embodiment, the alkylphosphine oxide is R1₃PO. In a particular embodiment, the alkylphosphine oxide is R1₂R2PO. In a particular embodiment, the alkylphosphine oxide is R1R2₂PO. In a particular embodiment, the alkylphosphine oxide is R2₃PO. In a particular embodiment, the alkylphosphine oxide is the combination of R1₃PO, and R1₂R2PO. In a particular embodiment, the alkylphosphine oxide is the combination of R1₃PO, and R1R2₂PO. In a particular embodiment, the alkylphosphine oxide is the combination of R1₃PO, and R2₃PO. In a particular embodiment, the alkylphosphine oxide is the combination of R1₂R2PO, and R1R2₂PO. In a particular embodiment, the alkylphosphine oxide is the combination of R1₂R2PO, and R2₃PO. In a particular embodiment, the alkylphosphine oxide is the combination of R1R2₂PO, and R2₃PO. In a particular embodiment, the alkylphosphine oxide is the combination of R1₃PO, R1₂R2PO, and R1R2₂PO. In a particular embodiment, the alkylphosphine oxide is the combination of R1₃PO, R1₂R2PO, and R2₃PO. In a particular embodiment, the alkylphosphine oxide is the combination of R1₃PO, R1R2₂PO, and R2₃PO. In a particular embodiment, the alkylphosphine oxide is the combination of R1₂R2PO, R1R2₂PO, and R2₃PO. In a preferred embodiment, the alkylphosphine oxide is a combination of all of R1₃PO, R1₂R2PO, R1R2₂PO, R2₃PO, wherein R1 is the linear alkyl group -(CH₂)₇-CH₃ and wherein R2 is the linear alkyl group -(CH₂)₅-CH₃.

In a particular embodiment, the organic solvent is selected from the group consisting of kerosene, toluene, xylene and combinations thereof. In a preferred embodiment, the solvent is kerosene. In another particular embodiment, the solvent is kerosene with 10% (v/v) decanol in the organic phase.

All the terms and embodiments described elsewhere herein are equally applicable to these aspects of the invention.

It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### EXAMPLES

The following invention is hereby described by way of the following examples, which are to be construed as merely illustrative and not limitative of the scope of the invention.

### Example 1

Initial testing used 174 g/L (i.e., 0.5 mol/L) of a mixture of alkylphosphine oxide (available from Solvay) dissolved in kerosene (produced by Shell). The feed solution was a real hydrochloric acid solution produced on the regeneration of the refinery electrolyte polishing stage of the refinery electrolyte solution using ion-exchange resins (with an impurity content of 1.2 g/L of Sb, 2.3 g/L Bi, 2.8 g/L As (H₃AsO₄), 15 g/l H₂SO₄ and 48 g/l HCl). To extend the concentration range, the real hydrochloric acid solution was concentrated by evaporation by a factor of 2 and then samples of different Sb, Bi and As concentrations were prepared by dilution using 80 g/L HCI solution. Table 1 collects the composition of the different solutions evaluated.

**TABLE 1.: Composition of the hydrochloric acid aqueous solutions used for the evaluation of the treatment process.**

| **Sample** | **[As] (g/L)** | **[Sb] (g/L)** | **[Bi] (g/L)** | **[Cl] (g/L)** | **[SO₄²⁻] (g/L)** | **[H⁺] (g/L)** |
|---|---|---|---|---|---|---|
| **(1)** | 7.88 | 5.59 | 6.52 | 231.0 | 16.5 | 4.36 |
| **(2)** | 5.14 | 3.60 | 4.20 | 186.9 | 12.5 | 3.16 |
| **(3)** | 4.02 | 2.84 | 3.31 | 156.0 | 9.4 | 2.63 |
| **(4)** | 1.44 | 1.03 | 1.19 | 118.3 | 6.0 | 1.70 |
| **(5)** | 0.83 | 0.60 | 0.69 | 106.3 | 4.0 | 1.41 |
| **(6)** | 0.47 | 0.36 | 0.39 | 99.8 | 3.1 | 1.29 |

The organic and aqueous feed solutions were contacted at an organic:aqueous (O:A) ratio of 1:1 by volume in a 20 ml beaker at 50 RPM at 25° C. for at least 30 min. The resultant solutions were filtered through filter paper in the case of the organic phase and through Whatman #42 filter paper in the case of the aqueous phase in order to remove any entrainment and then saved for analysis after being diluted properly with a 2% HNO₃ solution. To test stripping, an aliquot of the organic phase was contacted with a strip solution at an O:A ratio of 10:1 by volume by shaking in a separator funnel on an automatic shaker at room temperature for 30 min. The resultant solutions were saved for analysis and filtered through appropriate filter paper to remove entrainment. Varying solutions were used to strip the loaded organic phase. The starting electrolyte solutions, the electrolyte solutions after metal extraction and the aqueous strip solution used to strip the loaded organic were analyzed for metal content by Atomic Emission Spectroscopy and Mass Spectrometry Inductively Coupled Plasma (ICP-AES, ICP-MS). Ion chromatography was used to determine the chloride and sulphate content and acid-base titration were used to determine the total acidity concentration.

**TABLE 2.: Extraction results of Sb, Bi and As from hydrochloric acid solution produced on the regeneration of the ion-exchange resins polishing stage using 174 g/L alkylphosphine oxide mixture in kerosene.**

| **Sample** | **[As] (g/L)** | **%As Extraction** | **[Sb] (mg/L)** | **%Sb Extraction** | **[Bi] (mg/L)** | **%Bi Extraction** |
|---|---|---|---|---|---|---|
| **(1)** | 6.25±0.91 | 20.70±5.6 | 5.05±3.75 | 99.90±0.01 | 15.60±1.13 | 99.80±0.01 |
| **(2)** | 2.78±0.03 | 45.90±0.5 | 17.05±9.55 | 99.50±0.30 | 32.60±0.23 | 99.60±0.57 |
| **(3)** | 1.96±0.01 | 51.15±0.3 | 23.65±3.32 | 99.15±0.07 | 2.30±0.16 | 99.90±0.07 |
| **(4)** | 0.72±0.01 | 50.25±0.4 | 46.10±0.57 | 95.55±0.07 | 1.95±0.16 | 99.80±0.14 |
| **(5)** | 0.37±0.01 | 55.60±0.6 | 39.15±1.63 | 93.50±0.28 | 5.10±0.36 | 99.30±0.49 |
| **(6)** | 0.17±0.01 | 63.55±0.1 | 23.35±0.07 | 93.60±0.01 | 2.00±0.14 | 99.75±0.36 |

The third, fifth and seventh columns of table 2 show the extraction percentage of the toxic impurity element (As) and the added-value impurities (Sb and Bi), respectively from the hydrochloric acid solution produced on the regeneration of the refinery electrolyte polishing stage of the refinery electrolyte solution using ion-exchange resins. The results of the experiment show that antimony and bismuth can be extracted quantitatively from the electrolyte solution while the toxic impurity is only partially extracted from the hydrochloric acid aqueous solution.

### Example 2

The same procedure from Experiment 1 was repeated. However, the extractant concentration was reduced to 87 g/L (i.e., 0.25 mol/L) of alkylphosphine oxide mixture in kerosene. Aqueous electrolyte solutions were from the hydrochloric acid solution produced on the regeneration of the refinery electrolyte polishing stage of the refinery electrolyte solution using ion-exchange resins.

**TABLE 3.: Extraction results of Sb, Bi and As from real hydrochloric acid solution produced on the regeneration of the ion-exchange resins polishing stage using 87 g/L alkylphosphine oxide mixture in kerosene.**

| **Sample** | **[As] (g/L)** | **%As Extraction** | **[Sb] (mg/L)** | **%Sb Extraction** | **[Bi] (mg/L)** | **%Bi Extraction** |
|---|---|---|---|---|---|---|
| **(1)** | 6.45±0.17 | 18.13 ±2.13 | 88.23±15.21 | 98.42±0.27 | 55.28±5.59 | 99.15±0.09 |
| **(2)** | 3.96±0.02 | 23.08±0.46 | 54.95±1.79 | 98.48±0.05 | 8.84±2.77 | 99.79±0.07 |
| **(3)** | 2.81±0.05 | 30.02±1.17 | 62.49±3.86 | 97.80±0.13 | 5.46±0.04 | 99.84±0.01 |
| **(4)** | 0.97±0.01 | 32.76±0.16 | 102.38±3.28 | 90.15±0.25 | 6.77±5.69 | 99.41±0.50 |
| **(5)** | 0.49±0.01 | 41.34±0.86 | 73.79±0.45 | 92.77±0.70 | 2.97±1.33 | 99.57±0.19 |
| **(6)** | 0.22±0.01 | 52.50±0.51 | 42.69±0.30 | 88.25±0.10 | 1.82±0.09 | 99.54±0.02 |

The third, fifth and seventh columns of table 3 show the percentage of the toxic impurity element (As) and the added-value impurities (Sb and Bi), respectively, extracted from the hydrochloric acid solution produced on the regeneration of the refinery electrolyte polishing stage of the refinery electrolyte solution using ion-exchange resins. The results of the experiment show that when the phosphine oxide concentration is reduced, the antimony and bismuth can still be extracted quantitatively from the electrolyte solution while the toxic non-metal is only partially extracted.

**TABLE 4.: Stripping results of Sb, Bi and As from the alkylphosphine oxide loaded organic phase scrubbing stage with water. The loaded organic phase has a concentration of 87 g/L alkylphosphine oxide mixture in kerosene.**

| **Sample** | **% As Scrubbing** | **% Sb Scrubbing** | **% Bi Scrubbing** |
|---|---|---|---|
| **(1)** | 27.5±5.1 | 0.08±0.05 | 0.01 |
| **(2)** | 23.7±0.5 | 0.5±0.1 | 0.01 |
| **(3)** | 18.7±0.3 | 2.8±0.4 | 0.01 |
| **(4)** | 22.3±0.1 | 9.7±1.8 | 0.02 |
| **(5)** | 15.7±0.4 | 9.9±0.2 | 0.03 |
| **(6)** | 10.3±0.7 | 9.9±0.1 | 0.02 |

The last three columns of table 4 show the percentage of the toxic impurity element (As) and the added-value impurities (Sb and Bi), respectively, re-extracted into the scrub raffinate from the loaded alkyphosphine oxide-kerosene phase. The results of the experiment show that antimony and bismuth are not re-extracted into the scrub raffinate while the toxic impurity arsenic is partially re-extracted.

### Example 3

A similar procedure as used in Experiment 1 was performed at 52 g/L (i.e., 0.15 mol/L) alkylphosphine oxide mixture extractant, except that in this case the real hydrochloric acid solution was not concentrated by evaporation by a factor of 2 and it was neither subjected to subsequent dilutions using 80 g/L HCI solution. That is, in these experiments the real hydrochloric acid solution was used without extending the original concentration range. The acidic aqueous solution was from the hydrochloric acid solution produced on the regeneration of the refinery electrolyte polishing stage of the refinery electrolyte solution using ion-exchange resins (with an impurity content of: 2.4 g/L of Sb, 2.8 g/L Bi, 3.4 g/L As (H₃AsO₄)). The organic and aqueous feed solutions were shaken at an organic to aqueous volumetric ratio (O:A) of 1:1 in a 20 mL glass vial for at least 30 min. After that, the phases were allowed to separate and were separately collected. The separate aqueous phase was saved for further analysis. The organic phase was firstly scrubbed with water to desorb the As that was previously extracted. Both phases were mixed at an O:A ratio of 5:1 in a glass vial for at least 30 min. After that, both phases were separated and collected. In order to obtain each metal separately, two different stripping steps were performed, one with HNO₃ for Bi recovery and another one with H₂SO₄ for Sb recovery. For both strips, an O:A ratio of 1:1 was maintained in glass vials of 20 mL for at least 30 min.

**TABLE 5.: Extraction percentages of As and metals (Sb and Bi) along the Solvent Extraction process with 52 g/L alkylphosphine oxide mixture extractant in kerosene.**

| | **As** | **Sb** | **Bi** |
|---|---|---|---|
| **Extraction** | 4.9% | 99.8% | 71.8% |
| **Scrubbing** | 84.7% | 2.4% | 15.8% |
| **HNO₃ strip** | 88.0% | 45.5% | 49.4% |
| **H₂SO₄ strip** | 53.0% | 81.3% | 47.5% |

The columns of Table 5 show the percentage of the toxic impurity element (As) and the added-value impurity (Sb and Bi), respectively extracted from the hydrochloric acid solution produced on the regeneration of the refinery electrolyte polishing stage of the refinery electrolyte solution using ion-exchange resins. The results show that the scrubbing step can remove almost the As loaded in the organic phase, while the acidic strippings can re-extract the metals. The values in Table 5 are expressed as percentage value against the initial quantities of each element in the initial HCI solution in the case of the Extraction step, and they are expressed as percentage value against the quantities of each element in the immediately preceding phase from which they originate in the case of the Scrubbing, HNO₃ stripping and H₂SO₄ stripping steps. That is, by scrubbing with water, 84.69% of the As contained in the organic phase is eliminated (4.89% of the initial one).

From these results, it can be seen that the varying of organic phases can be used to impact the extraction and stripping of impurities for removal. Also, it can be seen that the extraction from multi-impurity spiked hydrochloric acid solutions behaved differently than the single-impurity spiked electrolyte solutions.

## Claims

1. A method for separating antimony and bismuth from arsenic in an acidic aqueous medium, wherein the method comprises:
a) contacting the acidic aqueous medium containing antimony, bismuth and arsenic with an organic phase, wherein the organic phase comprises an alkylphosphine oxide as an extraction agent;
b) separating the acidic aqueous medium from the organic phase, wherein the arsenic remains in the acidic aqueous medium and wherein the antimony and bismuth are extracted into the organic phase,
wherein the acidic aqueous medium is a hydrochloric acid solution, and wherein the hydrochloric acid concentration is between 1M and 6M.

2. A method for recovering antimony and bismuth and for removing arsenic from the hydrochloric acid solution that is generated during the regeneration of an ion-exchange resin used in the electrolytic refining of copper, wherein the method comprises:
- contacting the hydrochloric acid solution containing antimony, bismuth and arsenic with an organic phase, wherein the hydrochloric acid concentration is between 1M and 6M, and wherein the organic phase comprises an alkylphosphine oxide as an extraction agent;
- separating the hydrochloric acid solution from the organic phase, wherein the arsenic remains in the separated acidic aqueous phase and wherein the antimony and bismuth are extracted into the separated organic phase;
- contacting the separated organic phase with a scrub aqueous phase;
- separating the scrubbed organic phase from the scrub aqueous phase, wherein the separated scrub aqueous phase is pooled together with the separated hydrochloric solution, and contacting the pooled solution with a ferric and/or a ferrous salt to precipitate scorodite;
- contacting the scrubbed organic phase with a nitric acid strip solution;
- separating the bismuth stripped organic phase from the nitric acid strip solution, wherein the bismuth is extracted into the nitric acid strip solution, and contacting the nitric acid strip solution with an alkali solution to precipitate a first salt of bismuth, or with an alkali solution containing chloride ions to precipitate a second salt of bismuth.
- contacting the bismuth stripped organic phase with a sulphuric acid strip solution;
- separating the antimony and bismuth stripped organic phase from the sulphuric acid strip solution, wherein the antimony is extracted into the sulphuric acid strip solution, and contacting the sulphuric acid strip solution with an alkali solution to precipitate a first salt of antimony, or with an alkali solution containing chloride ions to precipitate a second salt of antimony.

3. The method according to claim 2, wherein the ferric and/or ferrous salt is selected from the group consisting of ferric chloride, ferrous sulphate and combinations thereof.

4. The method according to any one of claims 1 to 3, wherein the organic phase comprises a solvent selected from the group consisting of kerosene, toluene, xylene and combinations thereof.

5. The method according to any one of claim 1 to 4, wherein the organic phase further comprises an additive, wherein the additive comprises a long-chain alcohol selected from the group consisting of a C₈-C₁₆ linear, branched or cyclic or aryl alcohol, preferably wherein the additive is 10% (v/v) decanol in the organic phase.

6. The method according to claim 5, wherein the organic phase comprises and additive and phosphate esters, wherein the phosphate esters include di- or tri-substituted phosphate esters, preferably wherein the tri-substituted phosphate esters are selected from the group consisting of tributyl phosphate, trihexyl phosphate ester, trioctyl phosphate ester, and tripentyl phosphate ester.

7. The method according to any one of claims 1 to 6, wherein the alkylphosphine oxide is selected from the group consisting of R1₃PO, R1₂R2PO, R1R2₂PO, R2₃PO, and combinations thereof, wherein R1 is the linear alkyl group -(CH₂)₇-CH₃ and wherein R2 is the linear alkyl group -(CH₂)₅-CH₃.

8. The method according to claim 7, wherein the alkylphosphine oxide is a combination of all of R1₃PO, R1₂R2PO, R1R2₂PO, R2₃PO, wherein R1 is the linear alkyl group -(CH₂)₇-CH₃ and wherein R2 is the linear alkyl group -(CH₂)₅-CH₃.

9. Use of a composition comprising:
- an organic solvent; and
- an extraction agent, wherein the extraction agent is an alkylphosphine oxide,
for separating antimony and bismuth from arsenic in an acidic aqueous medium, wherein the acidic aqueous medium is a hydrochloric acid solution, and wherein the hydrochloric acid concentration is between 1M and 6M.

10. The use according to claim 9, wherein the alkylphosphine oxide is selected from the group consisting of R1₃PO, R1₂R2PO, R1R2₂PO, R2₃PO, and combinations thereof, wherein R1 is the linear alkyl group -(CH₂)₇-CH₃ and wherein R2 is the linear alkyl group -(CH₂)₅-CH₃.

11. The use according to claim 10, wherein the alkylphosphine oxide is a combination of all of R1₃PO, R1₂R2PO, R1R2₂PO, R2₃PO, wherein R1 is the linear alkyl group -(CH₂)₇-CH₃ and wherein R2 is the linear alkyl group -(CH₂)₅-CH₃.

12. The use according to any one of claims 9 to 11, wherein the organic solvent is selected from the group consisting of kerosene, toluene, xylene and combinations thereof.

13. The use according to any one of claim 9 to 12, wherein the organic phase further comprises an additive, wherein the additive comprises a long-chain alcohol selected from the group consisting of a C₈-C₁₆ linear, branched or cyclic or aryl alcohol, preferably wherein the additive is 10% (v/v) decanol in the organic phase.

14. The use according to claim 13, wherein the organic phase comprises and additive and phosphate esters, wherein the phosphate esters include di- or tri-substituted phosphate esters, preferably wherein the tri-substituted phosphate esters are selected from the group consisting of tributyl phosphate, trihexyl phosphate ester, trioctyl phosphate ester, and tripentyl phosphate ester.
